# EUROPÄISCHE PATENTSCHRIFT

(11) **EP 1 567 293 B1**
(45) Veröffentlichungstag und Bekanntmachung des Hinweises auf die Patenterteilung: **16.08.2006**
(21) Anmeldenummer: 03767668.1
(22) Anmeldetag: 26.11.2003
(51) Int. Cl.: B21K 5/04, B23P 15/32

(54) **VERFAHREN ZUR HERSTELLUNG VON BOHRWERKZEUGEN**
METHOD FOR THE PRODUCTION OF DRILLING TOOLS
PROCEDE DE PRODUCTION D'OUTILS DE PERCAGE

(30) Priorität: 27.11.2002 DE 10255498; 23.07.2003 DE 10333666
(43) Veröffentlichungstag der Anmeldung: 31.08.2005
(73) Patentinhaber: KOMET GROUP Holding GmbH, 74354 Besigheim (DE)
(72) Erfinder: KÖCHER, Michael, 71638 Ludwigsburg (DE)
(74) Vertreter: Wolf, Eckhard
(86) Internationale Anmeldenummer: PCT/EP2003/013293
(87) Internationale Veröffentlichungsnummer: WO 2004/048015

(56) Entgegenhaltungen:
- EP-A- 0 811 444
- DE-A- 4 113 273
- DE-A- 10 044 880
- DE-A- 19 856 986
- DE-U- 29 606 164
- US-A- 2 258 242
- US-A- 3 842 632

## Beschreibung

Die Erfindung betrifft ein Verfahren zur Herstellung eines Bohrwerhzeugs gemäß dem Oberbegriff der Anspruchs 1.

Aus der DE-A-198 56 986 , welche die Basis für den Oberbegriff des Anspruchs 1 bildet, ist es bekannt, zur Herstellung eines Bohrwerkzeugs einen rohrförmigen Rohling zu verwenden, der aus einem Rohrstück mit über seine Länge konstantem Innen- und Außendurchmesser aus duktilem Material besteht. Der Rohling wird dort zur Herstellung eines Bohrerkörpers unter Einformen von Spannuten und Kühlmittelkanälen im Rundknetverfahren spanlos umgeformt und wird nachträglich an seinem rückwärtigen Ende mit einem Bohrerschaft zur Einspannung in eine Werkzeugmaschine bestückt. Es ist dabei bekannt, dass der Bohrerschaft beispielsweise am fertigen Bohrerkörper durch geeignete Spannmittel (z.B. Schrauben) eingespannt wird. Dazu ist eine an den Bereich der Spannut anschließende Spannpartie erforderlich. Bei der Herstellung konkreter, im Einsatz funktionsfähiger Bohrer unter Verwendung der bekannten Rohlinge mit über die Länge konstantem Innen- und Außendurchmesser hat es sich gezeigt, dass je nach Wandstärke des Rohlings entweder die spanlose Umformbarkeit in der Umformpartie oder die Festigkeit in der Spannpartie zu wünschen übrig lässt.

Ausgehend hiervon liegt der Erfindung die Aufgabe zugrunde, ein Verfahren zur Herstellung eines Bohrwerhzeugs zu entwickeln, das den unterschiedlichen Verformungs- und Festigkeitsvoraussetzungen in der Umformpartie und der Spannpartie des Bohrerkörpers Rechnung trägt.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die erfindungsgemäße Lösung geht von der Erkenntnis aus, dass für die Herstellung von Bohrwerkzeugen der Rohling in der Umformpartie eine relativ kleine Materialwandstärke aufweisen sollte, damit mit wenigen Arbeitsschritten eine ausreichende Verformung stattfinden kann, während im Bereich der Spannpartie dickerwandiges Material erforderlich ist, um die bei der Einspannung auftretenden Kräfte aufnehmen zu können. Die Einspannung am Bohrerschaft erfolgt beispielsweise mittels Spannschrauben, die gegen eine Spannfläche in der Spannpartie einwirken, oder durch thermisches Aufschrumpfen des Werkzeugschafts auf die Spannpartie. Im ersteren Falle ergeben sich durch die Spannfläche Materialverdünnungen, wenn sie spanabhebend erzeugt werden. Da die Spannschrauben gegen die materialverdünnte Zone andrücken, muss dafür gesorgt werden, dass noch ausreichend Material bei der Erzeugung der Spannfläche stehen bleibt. Entsprechendes gilt, wenn die Spannfläche spanlos beispielsweise in einem Schmiedevorgang eingeformt wird. Im Falle des Schrumpfens muss berücksichtigt werden, dass das Spannfutter auf erhöhte Temperatur, beispielsweise auf 400 °C aufgeheizt wird und eine relativ hohe Wärmekapazität aufweist. Dies führt beim Kontakt zu einer Aufheizung der Spannpartie und im Moment der Einspannung zu einer reduzierten Festigkeit. Die Wandstärke muss daher so gewählt werden, dass die Spannpartie bei diesem Spann- oder Klemmvorgang nicht plastisch verformt wird. Um diesen einander widersprechenden Voraussetzungen Rechnung zu tragen, wird gemäß der Erfindung eine am schaftseitigen Ende der Umformpartie angeordnete, einstückig mit dieser verbundene Spannpartie vorgeschlagen, deren Rohrwandstärke größer als im Bereich der Umformpartie ist.

Gemäß einer bevorzugten Ausgestaltung der Erfindung ist der Rohraußendurchmesser im Bereich der Spannpartie größer als im Bereich der Umformpartie. Grundsätzlich ist es dabei möglich, dass der Rohrinnendurchmesser im Bereich der Spannpartie und der Umformpartie gleich groß ist, oder dass der Rohrinnendurchmesser im Bereich der Spannpartie größer oder kleiner als im Bereich der Umformpartie ist.

Eine weitere vorteilhafte Ausgestaltung der Erfindung sieht vor, dass auf der Außenseite der Spannpartie eine vorzugsweise ebene Spannfläche angeordnet ist, wobei der Rohrinnendurchmesser über die Länge der Spannpartie konstant oder variabel und im Bereich der Spannfläche kleiner als außerhalb der Spannfläche sein kann. Die Spannfläche kann dabei parallel zur Rohrachse verlaufen. Auch ein schräger Verlauf der Spannfläche gegenüber der Rohrachse ist möglich. Im letzteren Falle kann das Bohrwerkzeug besser gegen ein Herausziehen des Werkzeugs aus seiner Einspannung gesichert werden.

Am einfachsten ist es, wenn sowohl der innenseitige als auch der außenseitige Umriss des Rohlings über die Länge der Spannpartie und über die Länge der Umformpartie kreisförmig ist und einen konstanten Durchmesser aufweist. Grundsätzlich ist es jedoch auch möglich, dass der innenseitige Umriss zumindest über die Länge der Spannpartie oval oder elliptisch ausgebildet ist, wobei die Spannfläche zweckmäßig im Bereich des kleineren Rohrinnendurchmessers angeordnet ist. Auf diese Weise kann im Bereich der Spannfläche die Wandstärke und damit die Festigkeit der Spannpartie vergrößert werden.

Eine weitere vorteilhafte Ausgestaltung der Erfindung sieht vor, dass bei konstantem Rohraußendurchmesser der Rohrinnendurchmesser zumindest über einen Teil der Länge der Umformpartie zum freien Ende hin konisch divergiert. Mit dieser Maßnahme können die beim Umformvorgang gebildeten Kühlkanäle zur Bohrerspitze hin erweitert werden. Eine weitere Modifikation der Kühlkanäle über die Länge der Umformpartie lässt sich dadurch erreichen, dass der innenseitige Umriss des Rohlings zumindest über einen Teil der Länge der Umformpartie oval oder elliptisch ausgebildet ist.

Eine weitere bevorzugte Ausgestaltung der Erfindung sieht vor, dass zwischen der Umformpartie und der Spannpartie ein Übergangsabschnitt vorgesehen ist, der konisch verläuft. Vorteilhafterweise ist der Übergangsabschnitt innenseitig zwischen Spannpartie und Umformpartie in gleicher Richtung wie auf der Außenseite konisch ausgebildet. Zwischen Spannpartie und Umformpartie kann auch ein stufenförmiger Übergangsabschnitt angeordnet sein. Der Übergangsabschnitt kann dabei so ausgebildet und dimensioniert sein, dass dort mindestens ein Plattensitz zur Aufnahme einer Schneidplatte einformbar ist. Um die Strömungseigenschaften in den Kühlmittelkanälen zu verbessern, hat es sich als besonders vorteilhaft erwiesen, wenn der Strömungskanal im Übergangsabschnitt gegenüber der Spannpartie erweitert ist.

Zur Herstellung des rohrförmigen Rohlings für die spanlose Umformung bei der Herstellung von Bohrwerkzeugen wird zweckmäßig von einem Rohrstück mit konstantem Innen- und Außendurchmesser ausgegangen, das unter Bildung einer gegenüber einer Spannpartie dünnerwandigen Umformpartie zumindest partiell über einen Dorn von außen her umgeformt, vorzugsweise rundgeknetet wird, oder an seiner Innen- und/oder Außenfläche abgespant, vorzugsweise aufgebohrt oder abgedreht wird. Die Spannfläche kann in die Außenfläche der Spannpartie entweder spanabhebend oder spanlos eingeformt werden.

Im Folgenden wird die Erfindung anhand einiger bevorzugter Ausführungsbeispiele näher erläutert. Es zeigen
- Fig. 1a: eine Seitenansicht eines fertigen Bohrwerkzeugs mit wendelförmiger Spannut, verdicktem Spannschaft und angesetzter Bohrerspitze;
- Fig. 1b: einen Schnitt entlang der Schnittlinie B-B der Fig. 1a in vergrößerter Darstellung;
- Fig. 2a: bis d vier Ausführungsbeispiele von rohrförmigen Rohlingen für die Herstellung von Bohrwerkzeugen;
- Fig. 3a: einen rohrförmigen Rohling mit Spannfläche und ovalem Innendurchgang;
- Fig. 3b: einen Längsschnitt durch den Rohling nach Fig. 3a;
- Fig. 4: einen Längsschnitt durch einen Rohling mit in der Spannpartie eingeformter Spannfläche und konischem Innendurchgang in der Umformpartie.

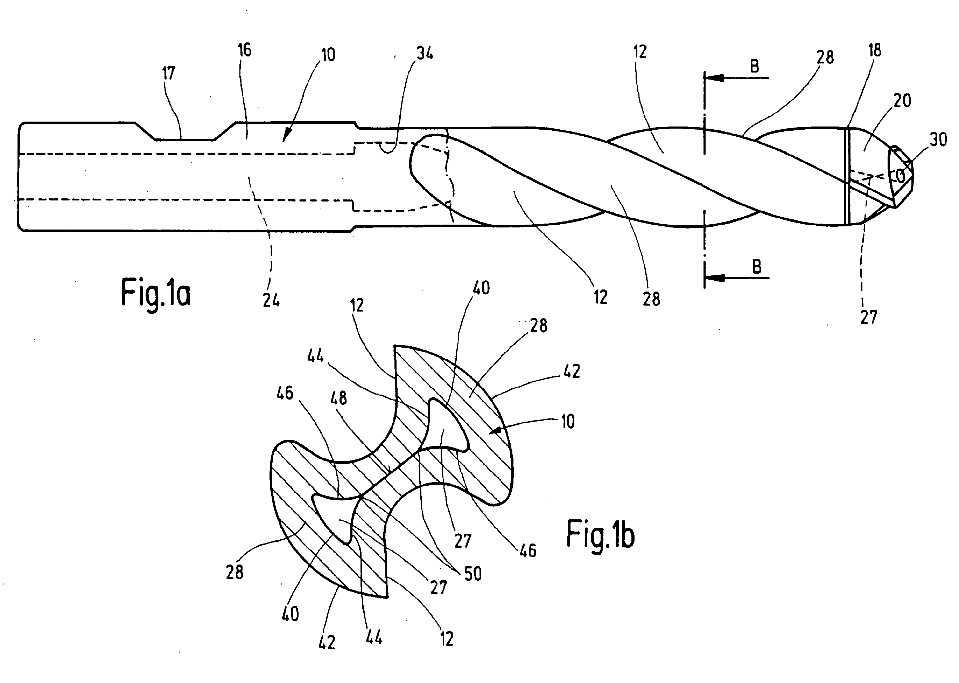

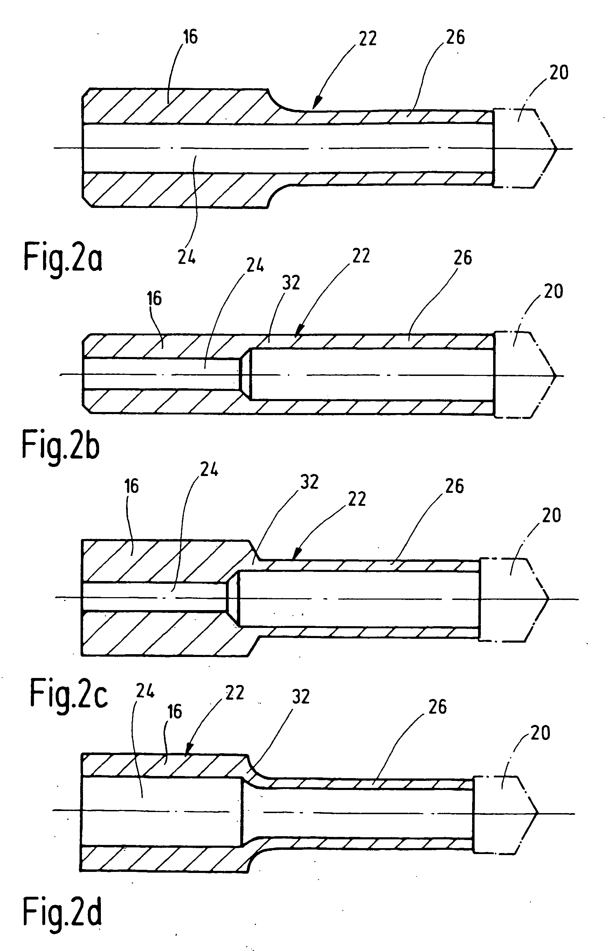

In Fig. 1a und b ist ein Bohrwerkzeug dargestellt, das einen einstückigen Bohrerkörper 10 mit gewendelten Spannuten 12 und angeformter Spannpartie 16 sowie eine am Bohrerkörper 10 über einer Lötstelle 18 stoffschlüssig angesetzte Bohrerspitze 20 aufweist. Der Bohrerkörper 10 wird aus einem rohrförmigen Rohling 22 hergestellt, der einen durchgehenden Zentralkanal 24 aufweist und dessen Wandstärke über die Länge variiert (Fig. 2a bis d). Bei der Herstellung des Bohrwerkzeugs nach Fig. 1 werden die Spannuten 12 im Rundknetverfahren in die Umformpartie 26 eingeformt. Gleichzeitig wird der Zentralkanal 24 im Bereich der Umformpartie 26 zu Kühlmittelkanälen 27 umgestaltet, die entlang der wendelförmigen Rippen 28 zwischen den Spannuten 12 bis zu den Austrittsstellen 30 im Bereich der Bohrerspitze 20 verlaufen. Die Kühlmittelkanäle 27 erhalten beim Umformvorgang im Bereich der Umformpartie 26 einen dreieckigen Querschnitt, dessen äußere Begrenzungsseite 40 eine zur teilzylindrischen Außenfläche 42 der betreffenden Rippen 28 partiell konzentrische nach außen konvexe Krümmung aufweist und dessen sich nach innen hin anschließende innere Begrenzungsseiten 44,46 sich in einer zur Bohrerachse 48 weisenden Dreieckskante 50 spitzwinklig treffen (vgl. DE-A-198 56 986). In dem Übergangsabschnitt 32 zwischen der Umformpartie 26 und der Spannpartie 16 gehen die beim Rundknetverfahren eingeformten Kühlkanäle stufen- und ansatzfrei in den Zentralkanal im Bereich der Spannpartie über.

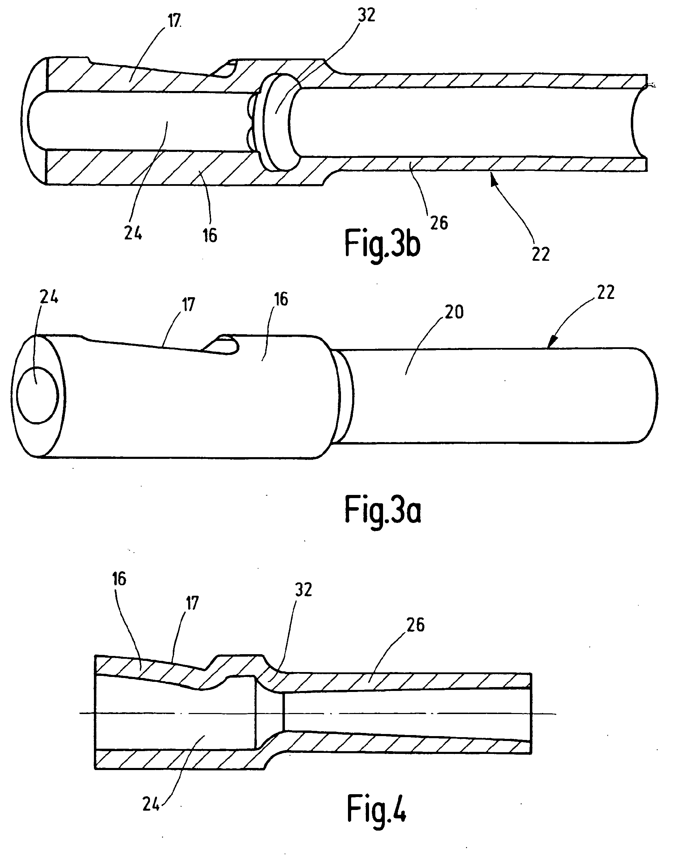

Das Bohrwerkzeug nach Fig. 1a weist außerdem eine Spannfläche 17 auf, die im Bereich der Spannpartie 16 des Rohlings entweder spanend oder spanlos eingeformt wird. Die Spannfläche 17 kann entweder achsparallel verlaufen, wie im Falle der Fig. 1a oder sie kann schräg ausgerichtet sein wie bei den in Fig. 3a, b und 4 gezeigten Ausführungsbeispielen. Bei dem in Fig. 3a und b gezeigten Ausführungsbeispiel ist der innenseitige Umriss des Zentralkanals 24 zumindest über die Länge der Spannpartie 16 so elliptisch ausgebildet, dass sich auf der Seite der Spannfläche 17 eine größere Wandstärke ausbildet. Der elliptische Zentralkanal 24 kann sich auch in die Umformpartie 26 fortsetzen. In diesem Falle werden die Kühlkanäle 27 beim Umformvorgang elliptisch spiralisiert.

Bei dem in Fig. 4 gezeigten Ausführungsbeispiel ist der Zentralkanal 24 bei konstantem Rohraußendurchmesser über die Länge der Umformpartie konisch erweitert. Mit dieser Maßnahme werden die beim Umformvorgang gebildeten Kühlkanäle 27 zur Bohrerspitze hin vergrößert.

Die Spannpartie 16 muss beim Einspannen in einen Werkzeugschaft Spannkräfte aufnehmen, ohne dass es dabei zu einer plastischen Verformung kommen darf. Andererseits muss der Rohling im Bereich der Umformpartie 26 zur Einbringung der Spannuten 12 durch plastische Verformung gezielt umgeformt werden. Um die widerstreitenden Bedingungen hinsichtlich Festigkeit und Verformbarkeit zu erfüllen, ist die Wandstärke des rohrförmigen Rohlings 22 in der Spannpartie 16 größer als in der Umformpartie. Dies kann bei gleichbleibendem Innendurchmesser des Zentralkanals 24 durch einen vergrößerten Außendurchmesser im Bereich der Spannpartie 16 (Fig. 2a) oder bei gleichbleibendem Außendurchmesser durch einen verkleinerten Innendurchmesser des Zentralkanals 24 im Bereich der Spannpartie (Fig. 2b) verwirklicht werden. Bei den Ausführungsbeispielen nach Fig. 2c und d weisen sowohl die Außenwand als auch der Zentralkanal 24 unterschiedliche Durchmesser im Bereich der Spannpartie 16 und der Umformpartie 26 auf. Im Falle der Fig. 2b bis d ist ein zusätzlicher Übergangsabschnitt 32 vorgesehen, der sowohl an der Außenwand als auch im Zentralkanal 24 konisch verlaufen kann (Fig. 2d). Bei den Ausführungsbeispielen nach Fig. 2b und c entsteht bei der Umformung im Übergangsabschnitt 32 eine Einströmkammer 34 mit erweitertem Querschnitt, wie sie in Fig. 1a gezeigt ist.

Zur Herstellung der rohrförmigen Rohlinge 22 nach Fig. 2a bis d kann von einem Rohrstück mit konstantem Innen- und Außendurchmesser ausgegangen werden, das unter Bildung einer gegenüber der Spannpartie 16 dünnerwandigen Umformpartie 26 an seiner Innen- und/oder Außenfläche abgespant, vorzugsweise aufgebohrt oder abgedreht, oder partiell über einen Dorn von außen her umgeformt, vorzugsweise rundgeknetet wird.

Der Rohling besteht zweckmäßig aus einem Einsatzstahl mit einem Phasenumwandlungspunkt von 480 bis 650°C. Vorteilhafterweise wird dazu ein Einsatzstahl mit einem Chromgehalt kleiner 2%, vorzugsweise ein 16 MnCr 5-Stahl verwendet. Der Einsatzstahl wird nach der Umformung beispielsweise durch Aufkohlen oder Aufnitrieren an der Oberfläche und ggf. an der Innenseite aufgehärtet. Der dadurch erzielte Härteverlauf in der Wand des Werkzeugschaftes führt zu einer hohen Belastbarkeit.

Zusammenfassend ist folgendes festzuhalten: Die Erfindung bezieht sich auf ein verfahren zur Herstellung von Bohrwerkzeugen, wobei der der verwendete vohrförmige Rohling eine unter Einformen von Spannuten 12 und Kühlmittelkanälen spanlos umformbare Umformpartie 26 aufweist und das fertige Bohrwerkzeug mit einem Schaft zur Einspannung in einer Werkzeugmaschine sowie mit einer mit Schneiden versehenen Bohrerspitze 20 bestückbar ist. Um den Bedingungen an die Festigkeit und die Umformbarkeit gerecht zu werden, weist der rohrförmige Rohling 22 eine am schaftseitigen Ende der Umformpartie 26 angeordnete, einstückig mit dieser verbundene Spannpartie 16 auf, deren Rohrwandstärke größer als im Bereich der Umformpartie 26 ist.

## Patentansprüche

1. Verfahren zur Herstellung eines Bohrwerkzeugs, das mit einem Schaft zur Einspannung in eine Werkzeugmaschine sowie mit einer mit Schneiden versehenen Bohrerspitze (20) bestückbar ist, unter Verwendung eines rohrförmigen Rohlings (22), wobei der rohrförmige Rohling eine Umformpartie (26) und eine am Ende der Umformpartie (26) angeordnete, einstückig mit dieser verbundene Spannpartie (16) aufweist, wobei die Umformpartie (26) unter Bildung von Spannuten (12) und von Kühlmittelkanälen (27) spanlos umgeformt wird **dadurch gekennzeichnet, daß** die Rohr wandstärke im Bereich der Spannpartie (16) größer als im Bereich der Umformpartie (26) ist.

2. Verfahren zur Herstellung eines Bohrwerkzeugs gemäß Anspruch 1, wobei der Rohraußendurchmesser des rohrförmigen Rohlings im Bereich der Spannpartie (16) größer als im Bereich der Umformpartie (26) ist.

3. Verfahren zur Herstellung eines Bohrwerkzeugs gemäß Anspruch 1 oder 2, wobei der Rohrinnendurchmesser des rohrförmigen Rohlings im Bereich der Spannpartie (16) und der Umformpartie (26) gleich groß ist.

4. Verfahren zur Herstellung eines Bohrwerkzeugs gemäß Anspruch 1 oder 2, wobei der Rohrinnendurchmesser des rohrförmigen Rohlings (22) im Bereich der Spannpartie (16) kleiner oder größer als im Bereich der Umformpartie (26) ist.

5. Verfahren zur Herstellung eines Bohrwerkzeugs gemäß einem der Ansprüche 1 bis 4, wobei auf der Außenseite der Spannpartie (16) des rohrförmigen Rohlings eine vorzugsweise ebene Spannfläche (17) spanabhebend oder spanlos eingeformt wird.

6. Verfahren zur Herstellung eines Bohrwerkzeugs gemäß Anspruch 5, wobei der Rohrinnendurchmesser des rohrförmigen Rohlings (22) über die Länge der Spannpartie (16) konstant ist.

7. Verfahren zur Herstellung eines Bohrwerkzeugs gemäß Anspruch 5, wobei der Rohrinnendurchmesser des rohrförmigen Rohlings (22) über die Länge der Spannpartie (16) variiert und im Bereich der Spannfläche (17) kleiner als außerhalb der Spannfläche (17) ist.

8. Verfahren zur Herstellung eines Bohrwerkzeugs gemäß einem der Ansprüche 5 bis 7, wobei die Spannfläche (17) parallel zur Rohrachse des rohrförmigen Rohlings (22) verläuft.

9. Verfahren zur Herstellung eines Bohrwerkzeugs gemäß einem der Ansprüche 5 bis 7, wobei die Spannfläche (17) schräg zur Rohrachse des rohrförmigen Rohlings ausgerichtet ist.

10. Verfahren zur Herstellung eines Bohrwerkzeugs gemäß einem der Ansprüche 5 bis 9, wobei der rohrförmige Rohling (22) einen Zentralkanal (24) aufweist, der zumindest über die Länge der Spannpartie (16) einen ovalen oder elliptischen Umriss aufweist.

11. Verfahren zur Herstellung eines Bohrwerkzeugs gemäß Anspruch 10, wobei die Spannfläche (17) im Bereich des kleineren Rohrinnendurchmessers der Spannpartie (16) angeordnet ist.

12. Verfahren zur Herstellung eines Bohrwerkzeugs gemäß einem der Ansprüche 1 bis 11, wobei der rohrförmige Rohling (22) einen Zentralkanal aufweist, der zumindest über einen Teil der Länge der Umformpartie (26) zum freien Ende hin bei konstantem Rohraußendurchmesser konisch divergiert.

13. Verfahren zur Herstellung eines Bohrwerkzeugs gemäß einem der Ansprüche 1 bis 12, wobei ein Übergangsabschnitt (32) außenseitig zwischen der Spannpartie (16) und der Umformpartie (26) des rohrförmigen Rohlings konisch verläuft.

14. Verfahren zur Herstellung eines Bohrwerkzeugs gemäß Anspruch 13, wobei der Übergangsabschnitt (32) innenseitig zwischen Spannpartie (16) und Umformpartie (26) in gleicher Richtung wie auf der Außenseite konisch verläuft.

15. Verfahren zur Herstellung eines Bohrwerkzeugs gemäß einem der Ansprüche 1 bis 14, wobei zwischen Spannpartie (16) und Umformpartie (26) des rohrförmigen Rohlings (22) ein stufenförmiger Übergangsabschnitt (32) angeordnet ist.

16. Verfahren zur Herstellung eines Bohrwerkzeugs gemäß einem der Ansprüche 13 bis 15, wobei der Übergangsabschnitt (32) so ausgebildet und dimensioniert ist, dass dort mindestens ein Plattensitz zur Aufnahme einer Schneidplatte einformbar ist.

17. Verfahren zur Herstellung eines Bohrwerkzeugs gemäß einem der Ansprüche 1 bis 16, wobei der rohrförmige Rohling aus einem Einsatzstahl mit einem Phasenumwandlungspunkt von 480 °C bis 650 °C besteht.

18. Verfahren zur Herstellung eines Bohrwerkzeugs gemäß einem der Ansprüche 1 bis 17, wobei der rohrförmige Rohling (22) aus einem Einsatzstahl mit einem Chromgehalt kleiner 2 %, vorzugsweise aus einem 16MnCr5-Stahl besteht.

19. Verfahren zur Herstellung eines Bohrwerkzeugs gemäß Anspruch 17 oder 18, wobei der rohrförmige Rohling (22) zumindest an seiner Außenfläche nach dem Umformvorgang aufgehärtet, vorzugsweise aufgekohlt oder aufnitriert wird.

20. Verfahren zur Herstellung eines Bohrwerkzeugs gemäß einem der Ansprüche 1 bis 19, wobei die Umformpartie (26) im Rundknetverfahren umgeformt wird.

21. Verfahren zur Herstellung eines Bohrwerkzeugs gemäß einem der Ansprüche 1 bis 20, wobei die Kühlmittelkanäle (27) vom Zentralkanal der Spannpartie (16) in die Umformpartie (26) stufen- und ansatzfrei eingeformt werden.

22. Verfahren zur Herstellung eines Bohrwerkzeugs gemäß einem der Ansprüche 1 bis 21, wobei im Bereich der Spannpartie (16) ein Spannschaft zur Einspannung in eine Werkzeugmaschine aufgespannt oder aufgeschrumpft wird.

23. Verfahren zur Herstellung eines Bohrwerkzeugs gemäß einem der Ansprüche 1 bis 22, wobei in einen an die Spannpartie (16) in Richtung der eine kleinere Rohrwandstärke aufweisenden Umformpartie (26) anschließenden Übergangsabschnitt (32) des rohrförmigen Rohlings (22) eine sich gegenüber dem Rohrinnendurchmesser der Spannpartie (16) erweiternder mit den Kühlmittelkanälen (27) der Umformpartie (26) kommunizierende Einströmkammer (34) eingeformt wird.

24. Verfahren zur Herstellung eines Bohrwerkzeugs gemäß einem der Ansprüche 1 bis 23, wobei zur Bildung des rohrförmigen Rohlings ein Rohrstück mit konstantem Innen- und Außendurchmesser verwendet wird, das unter Bildung der gegenüber der Spannpartie (16) dünnerwandigen Umformpartie (26) an seiner Innen- und/oder Außenfläche abgespant, vorzugsweise aufgebohrt oder abgedreht wird.

25. Verfahren zur Herstellung eines Bohrwerkzeugs gemäß einem der Ansprüche 1 bis 23, wobei zur Bildung des rohrförmigen Rohlings (22) ein Rohrstück mit konstantem Innen- und Außendurchmesser verwendet wird, das unter Bildung der gegenüber der Spannpartie (16) dünnerwandigen Umformpartie (26) zumindest partiell über einen Dorn von außen her umgeformt, vorzugsweise rundgeknetet wird.

## Claims

1. A method for the production of a drilling tool, which can be fitted with a shaft for clamping in a machine tool and with a drill tip (20) provided with cutting edges, by using a tubular blank (22), the tubular blank having a forming part (26) and a clamping part (16) which is arranged at the end of the forming part (26), is integrally connected to the latter and the forming part (26) being formed in a non-cutting manner while thereby forming chip grooves (12) and coolant channels (27), **characterized in that** the tubular wall thickness in the region of the clamping part (16) is greater than in the region of the forming part (26).

2. The method for the production of a drilling tool as claimed in claim 1, the outside tube diameter of the tubular blank being greater in the region of the clamping part (16) than in the region of the forming part (26).

3. The method for the production of a drilling tool as claimed in claim 1 or 2, the inside tube diameter of the tubular blank being equal in the region of the clamping part (16) and the forming part (26).

4. The method for the production of a drilling tool as claimed in claim 1 or 2, the inside tube diameter of the tubular blank (22) being smaller or greater in the region of the clamping part (16) than in the region of the forming part (26).

5. The method for the production of a drilling tool as claimed in one of claims 1 to 4, a preferably planar clamping area (17) being moulded by a metal-cutting or non-cutting process on the outer side of the clamping part (16) of the tubular blank.

6. The method for the production of a drilling tool as claimed in claim 5, the inside tube diameter of the tubular blank (22) being constant over the length of the clamping part (16).

7. The method for the production of a drilling tool as claimed in claim 5, the inside tube diameter of the tubular blank (22) varying over the length of the clamping part (16) and being smaller in the region of the clamping area (17) than outside the clamping area (17).

8. The method for the production of a drilling tool as claimed in one of claims 5 to 7, the clamping area (17) running parallel to the tube axis of the tubular blank (22).

9. The method for the production of a drilling tool as claimed in one of claims 5 to 7, the clamping area (17) being aligned obliquely with respect to the tube axis of the tubular blank.

10. The method for the production of a drilling tool as claimed in one of claims 5 to 9, the tubular blank (22) having a central channel (24), which has an oval or elliptical outline at least over the length of the clamping part (16).

11. The method for the production of a drilling tool as claimed in claim 10, the clamping area (17) being arranged in the region of the smaller inside tube diameter of the clamping part (16).

12. The method for the production of a drilling tool as claimed in one of claims 1 to 11, the tubular blank (22) having a central channel which, with a constant outside tube diameter, conically diverges at least over part of the length of the forming part (26) toward the free end.

13. The method for the production of a drilling tool as claimed in one of claims 1 to 12, a transitional portion (32) running conically on the outside between the clamping part (16) and the forming part (26) of the tubular blank.

14. The method for the production of a drilling tool as claimed in claim 13, the transitional portion (32) running conically on the inside between the clamping part (16) and the forming part (26) in the same direction as on the outer side.

15. The method for the production of a drilling tool as claimed in one of claims 1 to 14, a step-shaped transitional portion (32) being arranged between the clamping part (16) and the forming part (26) of the tubular blank (22).

16. The method for the production of a drilling tool as claimed in one of claims 13 to 15, the transitional portion (32) being formed and dimensioned in such a way that at least one bit seat for receiving a cutting bit can be formed in it there.

17. The method for the production of a drilling tool as claimed in one of claims 1 to 16, the tubular blank consisting of a case hardening steel with a phase transition point of from 480 to 650°C.

18. The method for the production of a drilling tool as claimed in one of claims 1 to 17, the tubular blank (22) consisting of a case hardening steel with a chromium content of less than 2%, preferably of a 16MnCr5 steel.

19. The method for the production of a drilling tool as claimed in claim 17 or 18, the tubular blank (22) being hardened, preferably carburized or nitrided, at least on its outer surface, after the forming operation.

20. The method for the production of a drilling tool as claimed in one of claims 1 to 19, the forming part (26) being formed by the swaging method.

21. The method for the production of a drilling tool as claimed in one of claims 1 to 20, the coolant channels (27) being formed from the central channel of the clamping part (16) steplessly and seamlessly into the forming part (26).

22. The method for the production of a drilling tool as claimed in one of claims 1 to 21, a clamping shaft for clamping into a machine tool being clamped or shrink-fitted on in the region of the clamping part (16).

23. The method for the production of a drilling tool as claimed in one of claims 1 to 22, an inflow chamber (34) which widens with respect to the inside tube diameter of the clamping part (16) and communicates with the coolant channels (27) of the forming part (26) being formed into a transitional portion (32) of the tubular blank (22) that adjoins the clamping part (16) in the direction of the forming part (26) having a smaller tubular wall thickness.

24. A method for the production of a drilling tool as claimed in one of claims 1 to 23, a piece of tube with a constant inside and outside diameter being used to form the tubular blank, which is subjected to a metal-cutting operation, preferably drilled or turned on a lathe, on its inner and/or outer surface, while thereby forming the forming part (26) that has a thinner wall than the clamping part (16).

25. A method for the production of a drilling tool as claimed in one of claims 1 to 23, a piece of tube with a constant inside and outside diameter being used to form the tubular blank (22), which is formed, preferably swaged, at least partially over a mandrel from the outside while thereby forming the forming part (26) that has a thinner wall than the clamping part (16).

## Revendications

1. Procédé de fabrication, en utilisant une ébauche tubulaire (22), d'un outil de perçage qui peut être équipé d'une queue pour le serrage dans une machine-outil et d'une pointe de foret (20) pourvue de tranchants, sachant que l'ébauche tubulaire présente une partie de formage (26) et une partie de serrage (16) disposée à l'extrémité de la partie de formage (26) et reliée d'un seul tenant à celle-ci, sachant que la partie de formage (26) est mise en forme sans enlèvement de matière en formant des rainures à copeaux (12) et des canaux de réfrigérant (27), **caractérisé en ce que** l'épaisseur de paroi du tube est plus grande dans la région de la partie de serrage (16) que dans la région de la partie de formage (26).

2. Procédé de fabrication d'un outil de perçage selon la revendication 1, sachant que le diamètre extérieur de tube de l'ébauche tubulaire est plus grand dans la région de la partie de serrage (16) que dans la région de la partie de formage (26).

3. Procédé de fabrication d'un outil de perçage selon la revendication 1 ou 2, sachant que le diamètre intérieur de tube de l'ébauche tubulaire est identique dans la région de la partie de serrage (16) et de la partie de formage (26).

4. Procédé de fabrication d'un outil de perçage selon la revendication 1 ou 2, sachant que le diamètre intérieur de tube de l'ébauche tubulaire (22) est plus petit dans la région de la partie de serrage (16) que dans la région de la partie de formage (26), ou plus grand.

5. Procédé de fabrication d'un outil de perçage selon l'une des revendications 1 à 4, sachant qu'une surface de serrage (17), de préférence plane, est formée en creux avec ou sans enlèvement de matière sur le côté extérieur de la partie de serrage (16) de l'ébauche tubulaire.

6. Procédé de fabrication d'un outil de perçage selon la revendication 5, sachant que le diamètre intérieur de tube de l'ébauche tubulaire (22) est constant sur la longueur de la partie de serrage (16).

7. Procédé de fabrication d'un outil de perçage selon la revendication 5, sachant que le diamètre intérieur de tube de l'ébauche tubulaire (22) varie sur la longueur de la partie de serrage (16) et est plus petit dans la région de la surface de serrage (17) qu'en dehors de la surface de serrage (17).

8. Procédé de fabrication d'un outil de perçage selon l'une des revendications 5 à 7, sachant que la surface de serrage (17) s'étend parallèlement à l'axe de tube de l'ébauche tubulaire (22).

9. Procédé de fabrication d'un outil de perçage selon l'une des revendications 5 à 7, sachant que la surface de serrage (17) est orientée en biais par rapport à l'axe de tube de l'ébauche tubulaire.

10. Procédé de fabrication d'un outil de perçage selon l'une des revendications 5 à 9, sachant que l'ébauche tubulaire (22) présente un canal central (24) qui présente un contour ovale ou elliptique au moins sur la longueur de la partie de serrage (16).

11. Procédé de fabrication d'un outil de perçage selon la revendication 10, sachant que la surface de serrage (17) est disposée dans la région du plus petit diamètre intérieur de tube de la partie de serrage (16).

12. Procédé de fabrication d'un outil de perçage selon l'une des revendications 1 à 11, sachant que l'ébauche tubulaire (22) présente un canal central qui diverge coniquement au moins sur une partie de la longueur de la partie de formage (26) en direction de l'extrémité libre, pour un diamètre extérieur de tube constant.

13. Procédé de fabrication d'un outil de perçage selon l'une des revendications 1 à 12, sachant qu'une partie de transition (32) s'étend coniquement sur le côté extérieur entre la partie de serrage (16) et la partie de formage (26) de l'ébauche tubulaire.

14. Procédé de fabrication d'un outil de perçage selon la revendication 13, sachant que la partie de transition (32) s'étend coniquement sur le côté intérieur entre la partie de serrage (16) et la partie de formage (26) dans la même direction que sur le côté extérieur.

15. Procédé de fabrication d'un outil de perçage selon l'une des revendications 1 à 14, sachant qu'une partie de transition (32) en gradin est disposée entre la partie de serrage (16) et la partie de formage (26) de l'ébauche tubulaire (22).

16. Procédé de fabrication d'un outil de perçage selon l'une des revendications 13 à 15, sachant que la partie de transition (32) est conçue et dimensionnée de telle sorte qu'au moins un siège de plaquette peut y être formé en creux pour recevoir une plaquette de coupe.

17. Procédé de fabrication d'un outil de perçage selon l'une des revendications 1 à 16, sachant que l'ébauche tubulaire est constituée d'un acier de cémentation avec un point de changement de phase de 480 °C à 650 °C.

18. Procédé de fabrication d'un outil de perçage selon l'une des revendications 1 à 17, sachant que l'ébauche tubulaire (22) est constituée d'un acier de cémentation avec une teneur en chrome inférieure à 2%, de préférence d'un acier 16MnCr5.

19. Procédé de fabrication d'un outil de perçage selon la revendication 17 ou 18, sachant que l'ébauche tubulaire (22) est, après le processus de mise en forme, trempée au moins sur sa surface extérieure, de préférence par carburation ou par nitruration.

20. Procédé de fabrication d'un outil de perçage selon l'une des revendications 1 à 19, sachant que la partie de formage (26) est mise en forme par le procédé d'épointage rotatif.

21. Procédé de fabrication d'un outil de perçage selon l'une des revendications 1 à 20, sachant que les canaux de réfrigérant (27) sont formés dans la partie de formage (26) depuis le canal central de la partie de serrage (16) sans gradin et sans rebord.

22. Procédé de fabrication d'un outil de perçage selon l'une des revendications 1 à 21, sachant qu'une queue de serrage pour le serrage dans une machine-outil est emmanchée par serrage ou par frettage dans la région de la partie de serrage (16).

23. Procédé de fabrication d'un outil de perçage selon l'une des revendications 1 à 22, sachant qu'est formée, dans une partie de transition (32) de l'ébauche tubulaire (22) qui se raccorde à la partie de serrage (16) en direction de la partie de formage (26) présentant une plus petite épaisseur de paroi de tube, une chambre de flux entrant (34) qui s'élargit par rapport au diamètre intérieur de tube de la partie de serrage (16) et qui communique avec les canaux de réfrigérant (27) de la partie de formage (26).

24. Procédé de fabrication d'un outil de perçage selon l'une des revendications 1 à 23, sachant que, pour former l'ébauche tubulaire, on utilise un tronçon de tube de diamètre intérieur et de diamètre extérieur constants qui est usiné par enlèvement de matière sur sa surface intérieure et/ou extérieure, de préférence par alésage ou au tour, formant ainsi la partie de formage (26) de paroi plus mince par rapport à la partie de serrage (16).

25. Procédé de fabrication d'un outil de perçage selon l'une des revendications 1 à 23, sachant que, pour former l'ébauche tubulaire (22), on utilise un tronçon de tube de diamètre intérieur et de diamètre extérieur constants qui est mis en forme au moins partiellement sur un mandrin de l'extérieur, de préférence par épointage rotatif, formant ainsi la partie de formage (26) de paroi plus mince par rapport à la partie de serrage (16).
